(19) Europäisches Patentamt
European Patent Office
Office européen des brevets

(11) Veröffentlichungsnummer: **0 271 884**
**A2**

(12) # EUROPÄISCHE PATENTANMELDUNG

(21) Anmeldenummer: **87118597.1**

(22) Anmeldetag: **15.12.87**

(51) Int. Cl.⁴: **C08F 257/02**, C08F 255/00, //(C08F257/02,214:06), (C08F255/00,214:06)

(30) Priorität: **17.12.86 DE 3642985**

(43) Veröffentlichungstag der Anmeldung: **22.06.88 Patentblatt 88/25**

(84) Benannte Vertragsstaaten: **DE FR NL**

(71) Anmelder: **HOECHST AKTIENGESELLSCHAFT**
**Postfach 80 03 20**
**D-6230 Frankfurt am Main 80(DE)**

(72) Erfinder: **Klippert, Heinz, Dr.**
**Hochfellnstrasse 14**
**D-8269 Burgkirchen(DE)**

(54) **Vinylchlorid-Pfropf-Mischpolymerisat und Verfahren zur Herstellung eines Vinylchlorid-Pfropf-Mischpolymerisates.**

(57) Es wird ein Verfahren zur Herstellung von Vinylchlorid-Pfropf-Mischpolymerisaten und ein neues Vinylchlorid-Pfropf-Mischpolymerisat beschrieben. 100 Gew.-Teile Vinylchlorid werden in Gegenwart von 2,4 bis 24 Gew.-Teilen eines Copolymeren in wäßriger Suspension pfropfmischpolymerisiert. Das Copolymere besteht aus polymerisierten Einheiten des Styrols beziehungsweise Methoxy-Styrols einerseits und des 1,3-Butadiens beziehungsweise 2-Methyl-1,3-Butadiens andererseits, das anschließend an seine Herstellung vollständig hydriert wurde. Die Pfropf-Mischpolymerisate können zu schlagzähen, hochtransparenten Formkörpern verarbeitet werden.

EP 0 271 884 A2

## Vinylchlorid-Pfropf-Mischpolymerisat und Verfahren zur Herstellung eines Vinylchlorid-Pfropf-Mischpolymerisates

Die Erfindung betrifft ein Verfahren zur Herstellung eines Vinylchlorid-Pfropf-Mischpolymerisates nach Anspruch 1 sowie ein Vinylchlorid-Pfropf-Mischpolymerisat nach Anspruch 6.

Es ist bereits seit längerer Zeit üblich, Vinylchlorid-Polymerisate durch Modifikation schlagzäher zu machen. Viele Verfahren sind hierzu bekannt, eine entsprechende Modifikation durch einfaches Zumischen eines anderen Polymerisates sowie auch durch Misch-oder Pfropf-Mischpolymerisation des Vinylchlorids mit copolymerisierbaren Monomeren und/oder pfropfcopolymerisierbaren Polymeren zu erreichen. Die Vielzahl dieser Verfahren zeigt, daß es offenbar sehr schwierig, wenn nicht gar unmöglich ist, ein für alle Anforderungen optimales Polymerisat zu erhalten. Es ist demnach nützlich, viele Herstellungsverfahren anhand zu haben, um für den jeweiligen Anwendungszweck ein nach Eigenschaften und Kosten optimales Polymerisat erzeugen zu können.

In bezug auf die vorliegende Erfindung sind die in der US-PS 4,212,958 beschriebenen Pfropfpolymere von Interesse, die aus 50 bis 90 Gew.-% eines gummiartigen Substrates aus einem hydrierten Butadien-Polymerisat oder Butadien-Styrol-Copolymerisat, 50 bis 3,7 Gew.-% eines (Meth-) Acrylat-Pfropf-Monomeren und 0 bis 35 Gew.-% eines vinylaromatischen Pfropfmonomeren bestehen. Diese Pfropfpolymerenkönnen als Modifikatoren für Polyvinylchlorid verwendet werden, um die Schlagzähigkeit zu verbessern, wobei ihre Zusammensetzung so eingestellt werden kann, daß transparente Artikel erzeugt werden können.

Ein Nachteil solcher Polymermischungen ist, daß Inhomogenitäten durch Entmischungserscheinungen auftreten können, die die Qualität der erzeugten Formkörper ungünstig beeinflussen. Ferner müssen, um das beschriebene Pfropfpolymere handhabbar und mit Polyvinylchlorid verträglich zu machen, vergleichsweise aufwendige Pfropfmonomere verwendet werden, die die Schlagzähigkeit nicht verbessern.

Es wurde nun ein Verfahren gefunden, mit dem Pfropfpolymere herstellbar sind, die die genannten Nachteile nicht aufweisen. Es handelt sich um ein Verfahren zur Herstellung eines Vinylchlorid-Pfropf-Mischpolymerisates durch Polymerisation von Vinylchlorid in wäßriger Suspension, in Gegenwart eines Copolymeren, mindestens eines öllöslichen Katalysators,mindestens eines Suspendiermittels sowie gegebenenfalls weiterer Polymerisationshilfsstoffe und Aufarbeitung der fertig polymerisierten Mischung zum trockenen Pfropf-Mischpolymerisat, dadurch gekennzeichnet, daß eingesetzt werden:

100 Gew.-Teile Vinylchlorid und

2,4 bis 24 Gew.-Teile eines Copolymeren, das seinerseits besteht aus

a) 20 bis 60 Gew.-%, bezogen auf das Copolymere, Einheiten der Formel

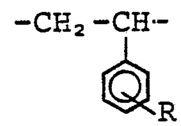 ,

worin bedeutet R = H; o-Methoxy-; p-Methoxy-;

b) 80 bis 40 Gew.-%, bezogen auf das Copolymere, Einheiten der Formel $-CH_2-CHR^1-$, worin bedeutet $R^1$ = H oder eine Alkylgruppe mit 1 bis 3 C-Atomen und

c) einem Rest, bestehend im wesentlichen aus H-Endgruppen, mit der Maßgabe, daß die Summe a + b + c 100 Gew.-%, bezogen auf das Copolymere, beträgt.

Die Herstellung eines Copolymeren, wie im vorangegangenen Absatz beschrieben, ist bekannt,und entsprechende Produkte sind am Markt erhältlich. Solche Copolymere können beispielsweise hergestellt werden durch Copolymerisation von mindestens einer der Verbindungen: Styrol, o-Methoxy-Styrol und p-Methoxy-Styrol mit 1,3-Butadien und/oder 2-Methyl-1,3-Butadien. Anschließend wird das Polymere hydriert, beispielsweise mit einem nickel-oder cobalthaltigen Katalysator. Eine mögliche Herstellart ist beschrieben in US-PS 4,212,958, Spalte 3, Zeilen 26 bis 68.

Von dem Copolymeren werden 2,4 bis 24 Gew.-Teile je 100 Gew.-Teile Monomere eingesetzt, um unter Berücksichtigung eines Monomerumsatzes von 77 bis 96 % ein Pfropf-Mischpolymerisat zu erhalten, das 3 bis 20 Gew.-% des ursprünglich eingesetzten Copolymerisates enthält. Unter 3 Gew.-% Copolymergehalt zeigt das Pfropfmischpolymerisat im allgemeinen keine ausreichende Schlagzähigkeitsverbesserung gegenüber einem Vinylchlorid-Homopolymerisat, die die höheren Herstellkosten des Pfropfmischpolymerisates rechtfertigen würde. Oberhalb 20 Gew.-% Copolymergehalt wird an dem Pfropfmischpolymerisat kein zusätzlich verbessernder Effekt mehr festgestellt, bei deutlich höheren Gehalten

können dagegen bestimmte Eigenschaften der aus dem Pfropf-Mischpolymerisat erzeugten Formkörper ungünstiger werden. Vorzugsweise werden je 100 Gew.-Teile Monomere 3,2 bis 13,1 Gew.-Teile des Copolymeren bei der Polymerisation eingesetzt, um ein Pfropf-Mischpolymerisat zu erhalten, das 4 bis 12 Gew.-%, bezogen auf das Pfropf-Mischpolymerisat, an Copolymeren enthält.

Wegen der leichten Zugänglichkeit sind für das erfindungsgemäße Verfahren Copolymere bevorzugt, die aus Einheiten der obengenannten Formeln bestehen, in denen R = H und $R^1$ = H und/oder $-C_2H_5$ sind. Solche Produkte werden, wie oben beschrieben, durch Copolymerisation von Styrol mit 1,3-Butadien und nachfolgende Hydrierung erhalten.

Das für die Pfropfpolymerisation verwendete Copolymere soll 20 bis 60 Gew.-%, bezogen auf das Copolymere, Einheiten der Formel

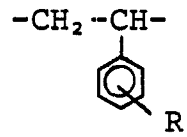

enthalten, worin bedeutet R = H; o-Methoxy-; p-Methoxy-. Enthält das Copolymere weniger als 20 Gew.-% der genannten Einheiten, so können daraus nur Pfropf-Mischpolymerisate erzeugt werden, die nur zu wenig transparenten Formkörpern führen. Solche Formkörper sind mit ausreichender Schlagzähigkeit mit Hilfe anderer Vinylchlorid-Polymerisate, die kostengünstiger erzeugt werden können, herstellbar. Enthält das Copolymere mehr als 60 Gew.-% von Einheiten der genannten Formel, so lassen die Schlagzähigkeitseigenschaften der aus den damit erzeugten Pfropf-Mischpolymerisaten hergestellten Formkörper nach. Vorzugsweise soll das Copolymere 45 bis 55 Gew.-% Einheiten der Formel

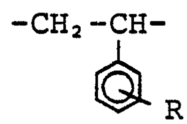

enthalten.

Der Rest des für das erfindungsgemäße Verfahren einzusetzenden Copolymeren besteht aus Einheiten der Formel $-CH_2-CHR^1-$, worin bedeutet $R^1$ = H und/oder eine Alkylgruppe mit 1 bis 3 C-Atomen, außerdem einen vergleichsweise geringen Rest, der im wesentlichen aus H-Endgruppen besteht. Die Einheiten der zuletzt genannten Formel stammen aus der 1,2-oder 1,4-Polymerisation des 1,3-Butadiens oder des 2-Methyl-1,3-Butadiens. In der Regel enthalten die Copolymerisate Mischungen von Einheiten der Formel $-CH_2-CHR^1-$, worin $R^1$ = H und $-C_2H_5$ bedeutet, wenn für die Herstellung des Copolymeren 1,3-Butadien eingesetzt wurde und es bedeutet $R^1$ = $-CH_3$ sowie $-C_3H_7$, wenn zur Herstellung des Copolymeren 2-Methyl-1,3-Butadien verwendet wurde. Das Copolymere kann auch Mischungen von Einheiten der Formel

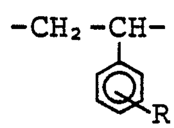

enthalten, worin R = H und Methoxy-sein kann, wenn für die Herstellung des Copolymeren ein Gemisch von Styrol und Methoxystyrol verwendet wurde.

Die mittlere Kettenlänge der Einheiten im Copolymeren charakterisiert durch die Lösungsviskosität, gemessen als 20 gew.-%ige Lösung in Toluol bei 25 °C, kann in erheblichen Bereichen schwanken. Liegt diese Viskosität unter 100 mPa • s, so sind im allgemeinen die mechanischen Werte der Formkörper, die aus dem erfindungsgemäß hergestellten Pfropfmischpolymerisat erzeugt werden, zwar schon gut, aber noch nicht optimal. Bei Lösungsviskositäten > 5000 mPa s können in zunehmendem Maße Schwierigkeiten bei der Pfropfpolymerisation auftreten, insbesondere, wenn das Copolymere nach einer bevorzugten Ausführungsform des erfindungsgemäßen Verfahrens im Monomeren gelöst angewendet werden soll. Es wird vorzugsweise ein Copolymeres eingesetzt, das eine Lösungsviskosität von 100 bis 5000 mPa s aufweist. Besonders gute Ergebnisse werden erhalten mit einem Copolymeren, dessen Lösungsviskosität im Bereich von 300 bis 1600 mPa s liegt.

Wie oben bereits erwähnt, ist es vorteilhaft, das Copolymere vor der Polymerisation im monomeren Vinylchlorid zu lösen.

Als Monomeres wird ein Vinylchlorid verwendet, das bis zu 20 Gew.-% von mindestens einem mit Vinylchlorid copolymerisierbaren Monomeren enthalten kann. Geeignete Monomere sind beispielsweise Olefine, wie Ethylen oder Propylen; Vinylester von geradkettigen oder verzweigten Carbonsäuren mit 2 bis 20, vorzugsweise 2 bis 4 Kohlenstoffatomen, wie Vinylacetat, -propionat, -butyrat, -2-ethylhexoat; Vinylisotridecansäureester; Vinylhalogenide, wie Vinylfluorid, Vinylidenfluorid, Vinylidenchlorid; Vinylether; Vinylpyridin; ungesättigte Säuren, wie Malein-, Fumar-, Acryl-, Methacrylsäure und deren Mono-oder Diester mit Mono-oder Dialkoholen mit 1 bis 10 Kohlenstoffatomen; Maleinsäureanhydrid; Maleinsäureimid sowie deren N-Substitutionsprodukte mit aromatischen, cycloaliphatischen sowie gegebenenfalls verzweigten aliphatischen Substituenten.

Im allgemeinen werden jedoch mit reinem Vinylchlorid als Monomerem bereits sehr gute Werte erhalten, weshalb diese Art der Polymerisation bevorzugt ist.

Die Polymerisation wird in druckfesten Apparaturen unter Bewegung der Polymerisationsflotte bei Temperaturen von 45 bis 75 °C durchgeführt. Je 100 Teile eingesetzten monomeren Vinylchlorids werden zweckmäßig etwa 150 bis 300 Teile Wasser, 0,001 bis 3, vorzugsweise 0,01 bis 0,3 Teile eines für die Suspensionspolymerisation von Vinylchlorid bekannten öllöslichen, radikalisch zerfallenden Katalysators oder eines Gemisches aus mehreren solcher Katalysatoren sowie 0,05 bis 3 Gew.-Teile eines für die Suspensionspolymerisation von Vinylchlorid üblichen bekannten Suspendiermittels, beispielsweise eines Celluloseethers oder teilverseiften Polyvinylacetats oder auch Gemische mehrerer solcher Suspendiermittel,eingesetzt. Die Polymerisation kann in Gegenwart von 0,01 bis 1 Gew.-Teil je 100 Gew.-Teile eingesetztes Monomeres beziehungsweise Monomerengemisch von einem oder mehreren Emulgatoren, insbesondere nichtionischen Emulgatoren, beispielsweise Polyoxyethylenester von Fettsäuren oder Polypropylenoxid-Polyethylenoxid-Kondensationsprodukte oder Sorbitanester, durchgeführt werden.

Neben Katalysatoren, Suspendiermitteln und gegebenenfalls Emulgatoren können bekannte Puffersubstanzen, Molekülgrößenregler oder auch Antioxidantien sowie weitere Polymerisationshilfsstoffe verwendet werden. Beispiele solcher geeigneter Polymerisationshilfsstoffe finden sich in H.Kainer "Polyvinylchlorid und Vinylchlorid-Mischpolymerisate" Auflage 1965, Seiten 13 bis 34.

Die Polymerisation wird zweckmäßig bis zu Umsätzen von 77 bis 96 Gew.-%, bezogen auf eingesetztes Monomeres fortgeführt. Es werden zwar auch bei geringeren Umsatzgraden noch im Sinne der Erfindung gut brauchbare Pfropf-Mischpolymerisate erhalten, doch sind niedrigere Umsatzgrade weniger wirtschaftlich und bieten im allgemeinen keine sonstigen Vorteile. Ebenso ist die Weiterführung der Polymerisation zu Umsätzen von über 96 Gew.-% Monomeres möglich, wobei aber erheblich verlängerte Polymerisationszeiten benötigt werden, die die Raum-Zeit-Ausbeute an Polymeren deutlich vermindern. Vorzugsweise wird im Bereich von 85 bis 95 Gew.-% Monomeren-Umsatz gearbeitet.

Die Polymerisation wird gegebenenfalls unter Rückflußkühlung, Verwendung von zwei oder mehreren Rührgeschwindigkeiten und/oder Temperaturstufen ausgeführt. Der pH-Wert der Polymerisationsflotte sollte zwischen 2 und etwa 10 liegen. Während der Polymerisation können ein oder mehrere Stoffe,gegebenenfalls unter Konstanthaltung des Füllvolumens des Polymerisationsgefäßes,zugegeben werden.

Die erfindungsgemäß hergestellten Pfropf-Mischpolymerisate können nach bekannten Verfahren sowohl in wäßriger Dispersion als wasserfeuchter Kuchen oder im pulverförmigen feuchten oder trockenen Zustand von restlichen Monomeren, insbesondere Vinylchlorid, befreit werden. Die Aufarbeitung der wäßrigen Polymerisat-Dispersion zum trockenen Pulver erfolgt ebenfalls nach bekannten Methoden, beispielsweise durch Dekantieren der Hauptmenge der wäßrigen Phase in einer Dekanter-Zentrifuge und Trocknen des so erhaltenen wasserfeuchten Kuchens in einem Strom-oder Wirbelbett-Trockner. So erhaltene pulverförmige Pfropf-Mischpolymerisate können wie bisher übliche Suspensionspolymerisate des Vinylchlorids, beispielsweise durch Extrudieren, Spritzgießen oder Kalandrieren, thermoplastisch verarbeitet werden.

Gegenstand der Erfindung ist auch ein Vinylchlorid-Pfropf-Mischpolymerisat, das neben Resten von Polymerisations-Hilfsstoffen ein Pfropf-Mischpolymerisat folgender Zusammensetzung enthält:

d) 97 bis 80 Gew.-% Einheiten der Formel $-CH_2-CHCl-$

e) 0,6 bis 12 Gew.-% Einheiten der Formel

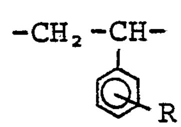

worin bedeutet R = H; o-Methoxy-oder p-Methoxy-;

f) 1,2 bis 16 Gew.-% Einheiten der Formel $-CH_2-CHR^1-$worin bedeutet, $R^1$ = H oder Alkylgruppe mit 1 bis 3 C-Atomen und

g) einen Rest, bestehend im wesentlichen aus H-Endgruppen mit der Maßgabe, daß die Summe d + e + f + g = 3 bis 20 Gew.-%, alle Gew.-%-Angaben bezogen auf das Pfropf-Mischpolymerisat, beträgt.

Wegen der leichten Zugänglichkeit des für die Pfropf-Mischpolymerisation notwendigen Copolymeren ist ein Pfropf-Mischpolymerisat, wie im vorgehenden Absatz beschrieben, bevorzugt, das als Komponente e) Einheiten der Formel

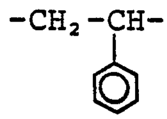

und als Komponente f) Einheiten der Formel $-CH_2-CHR^2-$, worin bedeutet $R^2$ = H und/oder-$C_2H_5$, enthält.

Wegen seiner besonders günstigen Eigenschaftskombination der damit erzeugten Formkörper und kostengünstigen Herstellbarkeit, ist ein Mischpolymerisat, wie im vorletzten Absatz beschrieben, bevorzugt, das neben Resten von Polymersations-Hilfsstoffen ein Pfropf-Mischpolymerisat folgender Zusammensetzung enthält:

d) 96 bis 88 Gew.-%

e) 1,35 bis 11 Gew.-%

f) 1,35 bis 11 Gew.-% und

g) einen Rest, bestehend im wesentlichen aus H-Endgruppen, mit der Maßgabe, daß die Summe d + e + f + g = 4 bis 12 Gew.-%, alle Gew.-%-Angaben bezogen auf das Pfropf-Mischpolymerisat, beträgt.

Die zuletzt beschriebenen Pfropf-Mischpolymerisate können beispielsweise hergestellt werden, nach dem eingangs beschriebenen Verfahren.

Die neuen Vinylchlorid-Pfropf-Mischpolymerisate sind zu Formkörpern verarbeitbar, die sich durch gute Schlagzähigkeit neben außergewöhnlich guter Transparenz auszeichnen, eine Eigenschaftskombination, die bisher nur schwer erreichbar war. Wie weiter oben bereits erwähnt, haben sie gegenüber einfachen Polymermischungen den Vorteil, besser homogene Produkte zu ergeben. Die Herstellung kann unter Verwendung von marktüblichen Copolymeren erfolgen.

Nachfolgende Beispiele und Vergleichsversuche sollen die Erfindung näher erläutern. Die nachfolgenden Meßwerte wurden nach folgenden Methoden ermittelt:

Schüttgewicht (SG) in g/dm³ nach DIN 53468

Kerbschlagzähigkeit ($a_{K23}$) in mJ/m² nach DIN 53453 bei 23 °C.

Transparenz charakterisiert durch die Lichtdurchlässigkeit (Ld) in % und das Streulicht in Durchstrahlungsrichtung (Str) in % nach folgender Methode:

Das Licht einer mit konstanter Spannung betriebenen Glühlampe wird vermittels eines Kollektors auf eine Blende mit senkrechtem Spalt konzentriert. Dieser Lichtspalt wird vermittels einer Optik durch eine Öffnung in eine Ulbricht'sche Kugel projiziert, die gegenüber der Lichteintrittsöffnung eine sogenannte "Lichtfalle" enthält und an der senkrecht zur Durchstrahlungsrichtung in einer Öffnung eine Fotozelle angebracht ist. Der von der Fotozelle bei Lichteinfall erzeugte elektrische Strom wird nach Verstärkung mit einem Drehspul-Instrument gemessen. An der Lichteintrittsöffnung der Ulbricht'schen Kugel ist ein Probenhalter für Proben von 10 × 10 cm und eine senkrechte Achse angebracht, um die die Ulbricht'sche Kugel aus ihrer Ruhelage seitwärts um einen gewissen Winkel geschwenkt werden kann, so daß das Bild des Lichtspaltes nicht mehr in die "Lichtfalle" fällt, sondern daneben auf die gleichmäßig reflektierende Innenoberfläche der Ulbricht'schen Kugel. Diese Stellung wird nachfolgend als "hell" bezeichnet, die Stellung, bei der das Bild des Spaltes in die Lichtfalle fällt, als "dunkel".

Zur Messung der Lichtdurchlässigkeit (Ld) wird die Ulbricht'sche Kugel in Stellung "hell" geschwenkt und so das Gesamtlicht ohne Probe G durch Messung am Drehspul-Instrument ermittelt. Nun wird als Probe eine durch Pressen erzeugte planparallele Platte von den Abmessungen 10 × 10 cm mit 1 mm Dicke in den Probenhalter an der Lichteintrittsöffnung der Ulbricht'schen Kugel gebracht und das Gesamtlicht mit Probe $G_p$ gemessen. Diese Messung wird an drei verschiedenen Platten, die alle mit dem gleichen Rohstoff und dem gleichen Rezept erzeugt wurden, durchgeführt und der Mittelwert aller drei Messungen für die Errechnung der Lichtdurchlässigkeit nach folgender Gleichung verwendet:

$$Ld = \frac{G_p \times 100}{G} \quad [\%]$$

Zur Messung des Streulichtes (Str) wird die Ulbricht'sche Kugel in Stellung "dunkel" geschwenkt und zunächst ohne Probe, das an der Apparatur gestreute Licht S durch Ablesen des Drehspulinstrumentes festgestellt. Nun werden die gleichen drei Proben wie oben nacheinander in den Probenhalter an der Lichteintrittsöffnung der Ulbricht'schen Kugel gebracht und das in Durchstrahlungsrichtung gestreute Licht mit Probe $S_p$ bestimmt. Das Streulicht (Str) bezogen auf das von der Probe durchgelassene Licht ist:

$$Str = \frac{S_p}{G_p} - \frac{S}{G} \times 100 \quad [\%]$$

Die als Proben hergestellten Pressplatten werden wie folgt erzeugt:
100 Gew.-Teile Polymerisat beziehungsweise Polymerisat-Mischung
2 Gew.-Teile eines Barium-Kadmium-Stabilisators (Lankromark®LP 125 der Firma Lankro, Drogenbos/Belgien)
0,5 Gew.-Teile Alkyl-Aryl--Phosphit (Typ LE 98 der Firma Lankro)
2 Gew.-Teile eines epoxydierten Sojabohnenöls (Edenol® D 81 der Firma Henkel Loxstedt/BR Deutschland)
0,5 Gew.-Teile eines Kohlenwasserstoffwachses (Irganox® 366 der Firma Ciba Geigy Marienberg/BR Deutschland) werden sorgfältig miteinander vermischt, dann werden 5 Minuten bei 175 °C 0,3 mm starke Felle durch Walzen daraus hergestellt. 4 dieser Walzfelle werden übereinander gelegt und in einer Presse zwischen hochglanzverchromten Blechen bei 175 °C zu einer 1 mm starken Platte gepreßt, aus der anschließend das Probenstück mit den Abmessungen 10 × 10 cm herausgeschnitten wird.

Die ermittelten Meßwerte sind nachfolgend in einer Tabelle aufgeführt.

Beispiel 1

In einen druckfesten Polymerisationskessel aus rostfreiem Stahl, der mit Doppelmantel zur Temperierung und einem stufenlos regelbaren Impeller-Rührer ausgerüstet ist, werden eingegeben:
15 000 Gew.-Teile entionisiertes Wasser,
2 Gew.-Teile Diisopropylperoxydicarbonat,
4 Gew.-Teile t-Butylpervivalat,
700 Gew.-Teile eines vollhydrierten Copolymeren aus 1,3-Butadien und Styrol, das 29 Gew.-%, bezogen auf das Copolymere, polymerisierte Einheiten des Styrols enthält und eine Viskosität der 20%igen Lösung in Toluol bei 25 °C gemessen mit einem Brookfield-Viskosimeter (Modell RVT) von 480 mPa s.
Unter Rühren der Flüssigkeit wird die im Kessel enthaltene Luft sorgfältig durch Stickstoff verdrängt und 10 000 Gew.-Teile monomeres Vinylchlorid unter Druck zugegeben. Diese Mischung wird eine Stunde kräftig gerührt, dann werden weiter zugegeben:
6 Gew.-Teile einer Methylhydroxypropylcellulose mit einem molaren Substitutionsgrad der Methoxygruppe von 1,8 und einem molaren Substitutionsgrad der Hydroxypropylgruppe von 0,13 sowie einer Viskosität, gemessen in 2 gew.-%iger wäßriger Lösung bei 20 °C von 40 × $10^3$ Pa s,
10 Gew.-Teile einer Hydroxyethylcellulose mit einem molaren Substitutionsgrad der Hydroxyethylgruppe von 1,65 und einer Viskosität, gemessen als 2 gew.-%ige wäßrige Lösung bei 20 °C von 350 × $10^3$ Pa s.
Es wird noch weitere 10 Minuten bei Raumtemperatur gerührt, dann wird die Mischung auf 60 °C erwärmt und unter Konstanthalten dieser Temperatur bis zu einem Druckabfall um 0,4 MPa polymerisiert. Dies entspricht einem Vinylchlorid-Umsatz von 84 %. Danach wird der Polymersationskessel entspannt, der Inhalt zur Entfernung von restlichen Monomeren nach bekanntem Verfahren behandelt, anschließend der gebildete Feststoff mit einer Zentrifuge von der flüssigen, wäßrigen Phase getrennt und in einem Stromtrockner auf eine Restfeuchte von > 0,3 Gew.-% Wasser, bezogen auf das Polymerisat,getrocknet. An diesem Polymerisat werden die weiter oben beschriebenen Messungen durchgeführt, Werte siehe Tabelle.

Beispiel 2

Es wird verfahren wie im Beispiel 1 beschrieben, jedoch wird als Copolymeres ein vollständig hydriertes 1,3-Butadien-Styrol-Copolymerisat eingesetzt, das 51 Gew.-%,bezogen auf das Copolymere,polymerisierte Styrol Einheiten enthält und dessen 20 gew.-%ige Lösung in Toluol bei 25 °C, wie weiter oben beschrieben gemessen, eine Lösungsviskosität von 210 mPa s aufweist. Es wird polymerisiert bis zu einem Druckabfall um 0,55 MPa, der Umsatz an monomerem Vinylchlorid beträgt 90 %. Die am fertigen, getrockneten Polymerisat ermittelten Werte sind in nachfolgender Tabelle aufgeführt.

Vergleichsversuch A:

Es wird verfahren wie in Beispiel 1 beschrieben, jedoch wird anstelle des vollhydrierten Butadien-Styrol-Copolymerisates ein fein zerkleinertes Ethylen-Propylen-Diencopolymerisat (Buna® 147 der Firma Chemische Werke Hüls Marl/BR Deutschland) eingesetzt. Die am fertigen, getrockneten Polymerisat ermittelten Werte, sind in nachfolgender Tabelle aufgeführt.

Vergleichsversuch B:

Analog der Zusammensetzung des in Beispiel 2 erhaltenen Vinylchlorid-Pfropf-Mischpolymerisates wird eine Polymer-Mischung hergestellt aus 92,8 Gew.-Teilen eines Vinylchlorid-Homopolymerisates vom K-Wert 66, das ein Schüttgewicht von 560 g/dm$^3$ aufweist,und 7,2 Gew.-Teilen des vollhydrierten 1,3-Butadien-Styrol-Copolymerisates, das in Beispiel 2 für die Pfropf-Mischpolymerisation eingesetzt wurde. Die an dieser Polymer-Mischung ermittelten Werte sind in nachfolgender Tabelle aufgeführt.

In dieser Tabelle bedeuten:

GewT = Gewichtsteile

Hydr.B/St = vollhydriertes 1,3-Butadien-Styrol Copolymerisat

EPDC = Ethylen-Propylen-Dien-Copolymerisat (Herkunft weiter oben beschrieben)

Die Bedeutung der weiteren Abkürzungen sind in der Beschreibung der Meßmethoden erklärt.

Tabelle I

| Beispiel/ Vergleichsversuch | Zur Polymerisation je 100 GewT Vinylchlorid eingesetztes Copolymeres | | | Am erzeugten Polymeren (beziehungsweise Polymeren-Mischung) gemessene Werte | | | |
|---|---|---|---|---|---|---|---|
| | Art | GewT | Styrolgehalt Gew.-% | SG (g/dm³) | $a_{K23}$ (mJ/m²) | Transparenz Ld(%) | Transparenz Str(%) |
| 1 | Hydr.B/St | 7 | 29 | 570 | 52 | 76 | 40 |
| 2 | Hydr.B/St | 7 | 51 | 550 | 48 | 91 | 20 |
| A | EPDC | 7 | - | 560 | 59 | 58 | 86 |
| B | Hydr.B/St+) | 7,2 | 51 | 530 | 6 | 1 | ++) |

+) Copolymeres nach der Polymerisation des reinen Vinylchlorids dem Polymerpulver zugemischt.

++) Angesichts der geringen Lichtdurchlässigkeit Angabe nicht sinnvoll.

Wie ersichtlich, ist das nach Vergleichsversuch A hergestellte Vinylchlorid-Pfropf-Mischpolymerisat den erfindungsgemäßen in der Transparenz (vergleichsweise niedrige Lichtdurchlässigkeit bei hohem Streulichtanteil) deutlich unterlegen. Die nach Vergleichsversuch B erzeugte Polymerenmischung, die praktisch die gleiche Zusammensetzung hat wie das nach Beispiel 2 erzeugte Pfropf-Mischpolymere zeigt völlig unbrauchbare Werte bezüglich Schlagzugzähigkeit ($a_{K23}$) und Transparenz.

Die nach Beispiel 1 und 2 erfindungsgemäß hergestellten Polymerisate haben folgende Zusammensetzung:

Tabelle II

| Beispiel | Gew.-% Einheiten der Formel $-CH_2-CHCl-$ | Gew.-% Einheiten der Formel $-CH_2-CH-$ 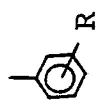 (R=H) | Gew.-% Einheiten der Formel $-CH_2CHR^1-$ ($R^1$ = H und $-C_2H_5$) |
|---|---|---|---|
| 1 | 92,3 | 2,2 | 5,5 |
| 2 | 92,8 | 3,7 | 3,5 |

**Ansprüche**

1. Verfahren zur Herstellung eines Vinylchlorid-Pfropf-Mischpolymerisates durch Polymerisation von Vinylchlorid in wäßriger Suspension, in Gegenwart eines Copolymeren, mindestens eines öllöslichen Katalysators, mindestens eines Suspendiermittels sowie gegebenenfalls weiterer Polymerisations-Hilfsstoffe

und Aufarbeitung der fertigpolymerisierten Mischung zum trocknen Pfropf-Mischpolymerisat, dadurch gekennzeichnet, daß eingesetzt werden:
100 Gew.-Teile Vinylchlorid und
2,4 bis 24 Gew.-Teile eines Copolymeren, das seinerseits besteht aus

a) 20 bis 60 Gew.-%, bezogen auf das Copolymere, Einheiten der Formel

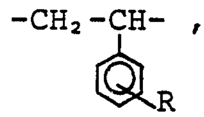

worin bedeuten R = H; o-Methoxy-; p-Methoxy-;

b) 80 bis 40 Gew.-%, bezogen auf das Copolymere, Einheiten der Formel $-CH_2-CHR^1$, worin bedeutet $R^1$ = H und/oder eine Alkylgruppe mit 1 bis 3 C-Atomen und

c) einem Rest, bestehend im wesentlichen aus H-Endgruppen,

mit der Maßgabe, daß die Summe a + b + c = 100 Gew.-%, bezogen auf das Copolymere, beträgt.

2. Verfahren nach Anspruch 1, dadurch gekennzeichnet, daß auf 100 Gew.-Teile Vinylchlorid 3,2 bis 13,1 Gew.-Teile des Copolymeren eingesetzt werden.

3. Verfahren nach Anspruch 1 oder 2, dadurch gekennzeichnet, daß das Copolymere
45 bis 55 Gew.-%, bezogen auf das Copolymere, Einheiten der Formel

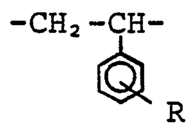

und 45 bis 55 Gew.-%, bezogen auf das Copolymere, Einheiten der Formel $-CH_2-CHR^1-$, worin R und $R^1$ die in Anspruch 1 genannte Bedeutung haben, enthält.

4. Verfahren nach einem oder mehreren der Ansprüche 1 bis 3, dadurch gekennzeichnet, daß das Copolymere eine Lösungsviskosität von 100 bis 5000 mPa s, gemessen als 20 gew.-%ige Lösung in Toluol bei 25 °C, aufweist.

5. Verfahren nach einem oder mehreren der Ansprüche 1 bis 4, dadurch gekennzeichnet, daß das Copolymere vor der Polymerisation in Vinylchlorid gelöst wird.

6. Vinylchlorid-Pfropf-Mischpolymerisat, das neben Resten von Polymerisations-Hilfsstoffen ein Pfropf-Mischpolymerisat folgender Zusammensetzung enthält:

d) 97 bis 80 Gew.-% Einheiten der Formel $-CH_2-CHCl-$

e) 0,6 bis 12 Gew.-% Einheiten der Formel

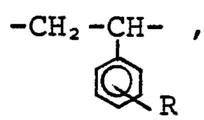

worin
bedeuten R = H; o-Methoxy-oder p-Methoxy-;

f) 1,2 bis 16 Gew.-% Einheiten der Formel $-CH_2-CHR^1$, worin bedeutet $R^1$ = H und/oder eine Alkylgruppe mit 1 bis 3 C-Atomen,

g) einen Rest, bestehend im westentlichen aus H-Endgruppen, mit der Maßgabe, daß die Summe d + e + f + g 3 bis 20 Gew.-%, alle Gew.-%-Angaben bezogen auf das Pfropf-Mischpolymerisat, beträgt.

7. Vinylchlorid-Pfropf-Mischpolymerisat nach Anspruch 6, dadurch gekennzeichnet, daß es als Komponente e) Einheiten der Formel

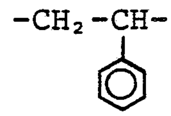

und als Komponente f) Einheiten der Formel $-CH_2-CHR^2-$, worin bedeutet $R^2$ = H; $-C_2H_5$, enthält.

8. Vinylchlorid-Pfropf-Mischpolymerisat nach Anspruch 6 oder 7, das neben Resten von Polymerisations-Hilfsstoffen ein Pfropf-Mischpolymerisat folgender Zusammensetzung enthält:

d) 96 bis 88 Gew.-%,

e) 1,35 bis 11 Gew.-%,

f) 1,35 bis 11 Gew.-% und

g) einen Rest, bestehend im wesentlichen aus H-Endgruppen,

mit der Maßgabe, daß die Summe aus d + e + f + g = 4 bis 12 Gew.-%, alle Gew.-%-Angaben bezogen auf das Pfropf-Mischpolymerisat, beträgt.